# EUROPÄISCHE PATENTSCHRIFT

(11) **EP 0 612 792 B1**
(45) Veröffentlichungstag und Bekanntmachung des Hinweises auf die Patenterteilung: **30.07.1997**
(21) Anmeldenummer: 94102044.8
(22) Anmeldetag: 10.02.1994
(51) Int. Cl.: C08J 9/20, C08J 9/00, C08L 25/04

(54) **Verfahren zur Herstellung von perlförmigen, expandierbaren Styrolpolymerisaten mit verringertem Innenwassergehalt**
Process for the production of expandable polystyrene beads with low water content
Procédé de préparation des perles expansibles de polystyrène à faible teneur en eau

(30) Priorität: 25.02.1993 DE 4305697
(43) Veröffentlichungstag der Anmeldung: 31.08.1994
(73) Patentinhaber: BASF Aktiengesellschaft, 67063 Ludwigshafen (DE)
(72) Erfinder: Scherzer, Dietrich, Dr., D-67433 Neustadt (DE); Hahn, Klaus, Dr., D-67281 Kirchheim (DE); Riethues, Michael, Dr., D-67071 Ludwigshafen (DE); Naegele, Dieter, Dr., D-67550 Worms (DE); Witt, Michael, Dr., D-67071 Ludwigshafen (DE); Husemann, Wolfram, Dr., D-67435 Neustadt (DE)

(56) Entgegenhaltungen:
- EP-A- 0 405 325
- EP-A- 0 409 694
- DE-A- 3 347 279

## Beschreibung

Die Erfindung betrifft ein Verfahren zur Herstellung perlförmiger, expandierbarer Styrolpolymerisate mit verringertem Innenwassergehalt und verbesserter Expandierbarkeit. Die Erfindung betrifft insbesondere die Herstellung perlförmiger, expandierbarer Styrolpolymerisate, die ein Polyethylenwachs und dimeres α-Methylstyrol enthalten.

Schaumstoffe auf Basis von Styrolpolymerisaten haben als Wärmedamm- und Verpackungsmaterial eine große technische Bedeutung erlangt. Sie werden großtechnisch dadurch hergestellt, daß man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in Formen zu Formteilen verschweißt.

Die Suspensionspolymerisation erfolgt hierbei in Gegenwart von Suspensionsstabilisatoren und üblicher styrollöslicher Polymerisationskatalysatoren.

Expandierbare Styrolpolymerisate (EPS), die durch Suspensionspolymerisation hergestellt werden, weisen unmittelbar nach der Polymerisation einen gewissen Innenwassergehalt auf. Dieser Innenwassergehalt muß durch eine kosten- und zeitaufwendige Trocknung reduziert werden. Trotz der Trocknung führt dies bei der weiteren Verarbeitung zu Schaumstoffen mit verschlechterten Produkteigenschaften, insbesondere mit verschlechterten Wärmedämmeigenschaften.

Andererseits sollen expandierbare Styrolpolymerisate über gute schäumtechnische Eigenschaften verfügen und für viele Zwecke die Erzielung möglichst niedriger Schaumstoffdichten ermöglichen.

Bei den bekannten expandierbaren Styrolpolymerisaten mußte bislang jedoch eine Verbesserung der schäumtechnischen Eigenschaften mit einer Erhöhung des Innenwassergehaltes erkauft werden.

Aufgabe der vorliegenden Erfindung war es daher, perlförmige, expandierbare Styrolpolymerisate mit verringertem Innenwassergehalt herzustellen, wobei die Expandierbarkeit nicht beeinträchtigt und möglichst verbessert sein sollte.

Gegenstand der Erfindung ist ein Verfahren zur Herstellung von perlförmigen, expandierbaren Styrolpolymerisaten durch Polymerisation von Styrol, gegebenenfalls unter Mitverwendung weiterer Comonomerer, in wäßriger Suspension in Gegenwart von Suspensionsstabilisatoren und üblicher styrollöslicher Polymerisationskatalysatoren und unter Zusatz eines Treibmittels und gegebenenfalls üblicher Zusatzstoffe in wirksamen Mengen, wobei die wäßrige Suspension, bezogen auf die Monomeren, 0,005 bis 1,5 Gew.-% eines Polyethylenwachses und 0,005 bis 1 Gew.-% dimeres α-Methylstyrol enthält, dadurch gekennzeichnet, daß als Suspensionsstabilisator Polyvinylpyrrolidon eingesetzt wird.

In der EP-B-106 129 ist die Verwendung von dimerem α-Methylstyrol als Molmassenregler bei der Herstellung von expandierbaren Styrolpolymerisaten beschrieben.

Aus der DE-A-15 20 790 ist ein Verfahren zur Herstellung von porigen Polymerprodukten und der dazu benutzten aufschäumbaren polyvinylaromatischen Massen bekannt, bei dem die Polymerisation in wäßriger Suspension in Gegenwart von 0,01 bis 1 Gew.-% eines organischen harzartigen Polymeren durchgeführt wird, das ein Polyethylenwachs mit einem Molekulargewicht von ungefähr 1500 bis 2500 ist.

Durch die Verwendung von 0,1 Gew.-% eines Polyethylenwachses wurde eine deutliche Verringerung der Abkühlzeit von entsprechenden Polystyrolschaumstoff-Formkörpern bewirkt.

Aus der GB-A-1 012 277 ist schäumbares Polystyrol sowie ein Verfahren zu dessen Verarbeitung bekannt. Die schäumbaren Polystyrolpartikel bestehen aus Polystyrol, einem flüchtigen Treibmittel und 0,1 bis 10 Gew.-%, bezogen auf Polystyrol, eines Wachses. Hierdurch wird u.a. eine Verringerung der Kühlzeit bei daraus hergestellten Formkörpern erzielt. Exzellente Ergebnisse wurden unter Verwendung von Polyethylenwachs erhalten. Bei einem Verfahren zur Herstellung dieses wachshaltigen schäumbaren Polystyrols wird das Wachs zumindest gegen Ende der Suspensionspolymerisation von Styrol eingesetzt.

Aus der EP-A-409 694 sind expandierbare Polymerperlen bekannt, die durch Polymerisation mindestens eines vinylaromatischen Monomers in wäßriger Suspension in Gegenwart von 0,01 bis 0,6 Gew.-% mindestens eines Polyethylenwachses und 0,005 bis 0,1 Gew.-% mindestens eines nichtionischen grenzflächenaktiven Mittels mit einem HLB-Wert von 7 bis 16, jeweils bezogen auf die vinylaromatischen Monomeren, erhalten wurden, wobei der Suspension 0,11 Gew.-% an dimerem α-Methylstyrol zugesetzt wurden.

In der GB-A-997 356 werden Wachse als Keimbildner für EPS genannt. Besonders günstige Eigenschaften sollen Polyethylenwachse mit Molekulargewichten zwischen 1500 und 2500 haben.

Styrolpolymerisate im Sinne der Erfindung sind Polystyrol und Mischpolymerisate des Styrols mit anderen α,β-olefinisch ungesättigten Verbindungen, die mindestens 50 Gewichtsteile Styrol einpolymerisiert enthalten. Erfindungsgemäß kommen daher als Comonomere z.B. in Frage α-Methylstyrol, kernhalogenierte Styrole, kernalkylierte Styrole, Acrylnitril, Ester der Acryl- oder Methacrylsäure von Alkoholen mit bis zu 8 C-Atomen, N-Vinylverbindungen, wie Vinylcarbazol oder auch geringe Mengen an Verbindungen, die zwei polymerisierbare Doppelbindungen enthalten, wie Butadien, Divinylbenzol oder Butandioldiacrylat.

Erfindungsgemäß werden als Treibmittel, bezogen auf das Styrolpolymerisat, im allgemeinen 1 bis 10 Gew.-%, vorzugsweise 3 bis 8 Gew.-%, eines C₃- bis C₇-Kohlenwasserstoffs (wie beispielsweise Propan, Butan, Isobutan, n-Pentan, i-Pentan, Neopentan und/oder Hexan) und/oder Kohlendioxid eingesetzt.

Bei Verwendung von Kohlendioxid als Treibmittel oder Treibmittelbestandteil kann in vorteilhafter Weise ein Kohlendioxid-Absorber gemäß der deutschen Patentanmeldung P 41 37 405.3 eingesetzt werden.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z.B. Glycerinester oder Hydroxycarbonsäureester. Die Zusatzstoffe können je nach der beabsichtigten Wirkung in den Teilchen homogen verteilt oder als Oberflächenbeschichtung vorliegen.

Entsprechend werden die Zusatzstoffe im erfindungsgemäßen Verfahren zugegeben oder anschließend auf die expandierbaren Styrolpolymerisate aufgebracht.

Durch gemeinsame Verwendung von Polyethylenwachs und dimerem α-Methylstyrol wird ein expandierbares Styrolpolymerisat mit verringertem Innenwassergehalt bei gleich guter oder verbesserter Expandierbarkeit erhalten.

Das erfindungsgemäß eingesetzte Polyethylenwachs hat im allgemeinen ein mittleres Molgewicht (Zahlenmittel) von 2000 bis 6000, vorzugsweise von 2000 bis 4000 und besonders bevorzugt zwischen 2800 und 3500. Ein besonders geeignetes Polyethylenwachs ist Luwax® AF31 der BASF Aktiengesellschaft mit einem mittleren Molgewicht von 3000.

Das erfindungsgemäß eingesetzte dimere α-Methylstyrol ist ein handelsübliches Produkt.

Die Suspensionspolymerisation von Styrol ist an sich bekannt. Sie ist ausführlich beschrieben im Kunststoff-Handbuch, Band V, "Polystyrol", Carl Hanser-Verlag, 1969, Seiten 679 bis 688. Dabei wird im allgemeinen Styrol, ggf. zusammen mit den oben genannten Comonomeren, in Wasser suspendiert, wobei Polyvinylpyrrolidon als Suspensionsstabilisator zugesetzt wird.

Im erfindungsgemäßen Verfahren werden perlförmige, expandierbare Styrolpolymerisate hergestellt durch Polymerisation von Styrol, ggf. zusammen mit bis zu 50 Gew.-% der obengenannten Comonomeren, in wäßriger Suspension, wobei vor, während oder nach der Polymerisation die oben beschriebenen Treibmittel und gegebenenfalls übliche Zusatzstoffe in wirksamen Mengen zugesetzt werden. Erfindungswesentlich ist hierbei, daß die wäßrige Suspension, bezogen auf die Monomeren, 0,005 bis 1,5 Gew.-% eines Polyethylenwachses, 0,005 bis 1 Gew.-% dimeres α-Methylstyrol (DMS) und Polyvinylpyrrolidon als Suspensionsstabilisator enthält.

Dabei wird das Wachs im allgemeinen entweder vorgelegt oder während der Polymerisation bis zu einem Umsatz von etwa 50 % zugegeben.

Das dimere α-Methylstyrol kann ebenfalls zudosiert oder vorgelegt werden.

Besonders vorteilhaft ist, wenn das Wachs vorgelegt und das dimere α-Methylstyrol während der Polymerisation zudosiert wird, beispielsweise zusammen mit dem verwendeten Treibmittel.

Die Suspensionspolymerisation erfolgt in Gegenwart von Polyvinylpyrrolidon und üblicher styrollöslicher Polymerisationskatalysatoren.

Die im erfindungsgemäßen Verfahren erhaltenen perlfömigen, expandierbaren Styrolpolymerisate werden nach beendeter Polymerisation auf bekannte Weise von der wäßrigen Phase abgetrennt, gewaschen und getrocknet.

Die erfindungsgemäß hergestellten treibmittelhaltigen Styrolpolymerisat-Teilchen haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,1 und 2 cm und einer Schüttdichte zwischen 0,005 und 0,1 g/cm³ vorgeschäumt werden.

Die vorgeschäumten Teilchen können dann nach üblichen Verfahren zu Schaumstoff-Formteilen mit einer Dichte von 0,005 bis 0,1 g/cm³ verschäumt werden.

Die Erfindung hat mehrere Vorteile. So zeigen die erfindungsgemäß herstellbaren perlförmigen, expandierbaren Styrolpolymerisate im allgemeinen Innenwassergehalte zwischen 0,3 und 0,5 Gew.-%, bezogen auf das Styrolpolymerisat, so daß auf eine aufwendige Trocknung und anschließendes Konditionieren verzichtet werden kann. Die perlförmigen, expandierbaren Styrolpolymerisate können direkt nach der Herstellung verarbeitet werden und liefern bei guter Expandierbarkeit homogene, feinzellige Schaumstoffe.

Beim erfindungsgemäßen Verfahren ist außerdem die Stabilität der Suspension während der Polymerisation verbessert.

### Beispiele 1 bis 2 und Vergleichsbeispiele 1 bis 5

### Beispiel 1

In einem druckfesten 50 l-Rührkessel aus rostfreiem Stahl wurde eine Mischung aus 19,5 kg voll entsalztem Wasser, 19,5 g Na₄P₂O₇, 52,7 g MgSO₄, 17 g Luwax® AF31 (Polyethylenwachs der BASF Aktiengesellschaft mit einer mittleren Molmasse von 3000) und 10,2 g dimeres α-Methylstyrol (DMS) vorgelegt. Hierzu wurden 17 kg Styrol, 17 g Dibenzoylperoxid und 51 g Dicumylperoxid zudosiert.

Die Mischung wurde innerhalb von 2 h von 25 auf 100°C und anschließend innerhalb von 5 h von 100 auf 130°C erhitzt. Bei 130°C wurde die Mischung noch für weitere 3 h gehalten.

Zu der Mischung wurden 55 min nach Erreichen einer Temperatur von 80°C 478 g einer 10 %igen wäßrigen Polyvinylpyrrolidon-Lösung (K-Wert: 90) und nach weiteren 125 min 1,3 kg Pentan zugefügt.

Die erhaltenen Perlen wurden abzentrifugiert, mit kalter Luft im Gegenstrom getrocknet und mit 0,1 Gew.-%, bezogen auf das Gewicht der unbeschichteten Perlen, Ethylen-bis-stearinsäureamid beschichtet.

Anschließend wurde die Perlgrößenfraktion 1,00 bis 2,00 mm herausgesiebt und mit 0,2 Gew.-% eines Gemisches aus 90 Gew.-% Glycerinmonostearat und 10 Gew.-% Kieselsäure FK320 (Fa. Goldschmidt) beschichtet.

Ein Teil dieser Perlgrößenfraktion wurde zur Bestimmung des Innenwassergehaltes durch Karl-Fischer-Titration verwendet.

Der restliche Teil dieser Perlgrößenfraktion wurde anschließend in einem diskontinuierlichen Vorschäumer, Typ Rauscher, vorgeschäumt und nach einer Zwischenlagerung von 12 h in einem Laborautomaten der Firma Erlenbach bei einem Dampfdruck von 1,2 bar (Überdruck) zu einem quaderförmigen Schaumstoffkörper ausgeschäumt.

Hierbei wurde die Entformzeit (d.h. die Zeit für den Druckabbau) bestimmt. Anhand von Schnitten durch den Schaumstoffkörper wurde durch Auszählen unter dem Aufsichtsmikroskop die Zellzahl pro mm bestimmt.

Die Meßergebnisse sind in der Tabelle aufgeführt.

### Beispiel 2

Es wurde gearbeitet wie in Beispiel 1, wobei DMS allerdings erst 180 min nach Erreichen einer Temperatur von 80°C zusammen mit dem Pentan zugefügt wurde.

### Vergleichsbeispiel 1

Es wurde gearbeitet wie in Beispiel 1, jedoch ohne Zusatz von Polyethylenwachs und DMS.

### Vergleichsbeispiel 2

Es wurde gearbeitet wie in Vergleichsbeispiel 1, wobei jedoch 5,1 g Hexabromcyclododekan und 1,7 g Ammoniumsulfat mit vorgelegt wurden.

### Vergleichsbeispiel 3

Es wurde gearbeitet wie in Vergleichsbeispiel 1, wobei jedoch 3,4 g tert.-Dodecylmercaptan 180 min nach Erreichen einer Temperatur von 80°C zugefügt wurden.

### Vergleichsbeispiel 4

Es wurde gearbeitet wie in Beispiel 1, jedoch ohne Zusatz von DMS.

### Vergleichsbeispiel 5

Es wurde gearbeitet wie in Beispiel 1, jedoch ohne Zusatz von Polyethylenwachs.

### Vergleichsbeispiel 6

Es wurde gearbeitet wie in Vergleichsbeispiel 2, wobei zusätzlich 3,4 g tert.-Dodecylmercaptan 180 min nach Erreichen einer Temperatur von 80°C zugefügt wurden.

Die Meßergebnisse für die Beispiele und Vergleichsbeispiele sind in der Tabelle aufgeführt.

**Tabelle**

| | Innenwassergehalt/% | Zellzahl/mm-¹ | Entformzeit/sec | Formteildichte/g/l |
|---|---|---|---|---|
| Beispiel 1 | 0,4 | 13 | 140 | 11 |
| Beispiel 2 | 0,3 | 13 | 130 | 10 |
| Vergleichsbeisp 1 | 0,6 | 5 | 600 | 16 |
| Vergleichsbeisp 2 | 1,3 | 15 | 110 | 13 |
| Vergleichsbeisp 3 | 1,0 | 8 | 260 | 11 |
| Vergleichsbeisp 4 | 0,5 | 12 | 310 | 13 |
| Vergleichsbeisp 5 | 0,6 | 6 | 550 | 12 |
| Vergleichsbeisp 6 | 1,5 | 16 | 90 | 12 |

## Patentansprüche

1. Verfahren zur Herstellung von perlförmigen, expandierbaren Styrolpolymerisaten durch Polymerisation von Styrol, gegebenenfalls unter Mitverwendung weiterer Comonomerer, in wäßriger Suspension in Gegenwart von Suspensionsstabilisatoren und üblicher styrollöslicher Polymerisationskatalysatoren und unter Zusatz eines Treibmittels und gegebenenfalls üblicher Zusatzstoffe in wirksamen Mengen, wobei die wäßrige Suspension, bezogen auf die Monomeren, 0,005 bis 1,5 Gew.-% eines Polyethylenwachses und 0,005 bis 1 Gew.-% dimeres α-Methlstyrol enthält, dadurch gekennzeichnet, daß als Suspensionsstabilisator Polyvinylpyrrolidon eingesetzt wird.

2. Verfahren nach Anspruch 1, dadurch gekennzeichnet, daß als Polymerisationskatalysatoren eine Kombination von Dibenzoylperoxid und Dicumylperoxid eingesetzt werden.

## Claims

1. A process for preparation of bead-form, expandable styrene polymers by polymerizing styrene, in the presence or absence of further comonomers, in aqueous suspension in the presence of suspension stabilizers and conventional styrene-soluble polymerization catalysts and with addition of a blowing agent and with or without addition of conventional additives in effective amounts, where the aqueous suspension contains, based on the monomers, from 0.005 to 1.5% by weight of a polyethylene wax and from 0.005 to 1% by weight of dimeric α-methylstyrene, wherein the suspension stabilizer used is polyvinylpyrrolidone.

2. A process as claimed in claim 1, wherein the polymerization catalysts employed are a combination of dibenzoyl peroxide and dicumyl peroxide.

## Revendications

1. Procédé de préparation de polymères du styrène expansibles, sous forme de perles, par la polymérisation du styrène, avec éventuelle utilisation conjointe d'autres comonomères, en suspension aqueuse et en présence de stabilisateurs de suspension et de catalyseurs de polymérisation solubles dans le styrène habituels et avec emploi d'un agent porogène et d'éventuels additifs habituels en proportions actives, où la suspension aqueuse contient, par rapport aux monomères, 0,005 à 1,5% en poids d'une cire de polyéthylène et 0,005 à 1% en poids d'α-méthylstyrènedimérique, caractérisé en ce que l'on utilise de la polyvinylpyrrolidone, à titre de stabilisateur de suspension.

2. Procédé suivant la revendication 1, caractérisé en ce que l'on utilise une combinaison de peroxyde de dibenzoyle et de peroxyde de dicumyle, à titre de catalyseurs de polymérisation.
